(19) Europäisches Patentamt
European Patent Office
Office européen des brevets

(11) Veröffentlichungsnummer: **0 118 057**
**B1**

(12) **EUROPÄISCHE PATENTSCHRIFT**

(45) Veröffentlichungstag der Patentschrift:
15.07.87

(51) Int. Cl.⁴: **G 02 B 26/10, H 04 N 3/08**

(21) Anmeldenummer: **84101412.9**

(22) Anmeldetag: **11.02.84**

(54) Verfahren zur optisch-mechanischen Abtastung zweier Sehfelder und Vorrichtung zur Durchführung des Verfahrens.

(30) Priorität: **03.03.83 DE 3307484**

(43) Veröffentlichungstag der Anmeldung:
**12.09.84 Patentblatt 84/37**

(45) Bekanntmachung des Hinweises auf die Patenterteilung:
**15.07.87 Patentblatt 87/29**

(84) Benannte Vertragsstaaten:
**AT BE CH DE FR GB IT LI LU NL SE**

(56) Entgegenhaltungen:
**DE - A - 3 211 046**
**GB - A - 2 101 352**

(73) Patentinhaber: **EGO Entwicklungsgesellschaft für Optronik mbH, Fördestrasse 35, D-2392 Glücksburg (DE)**

(72) Erfinder: **Menke, Josef E., Fördestrasse 27, D-2392 Glücksburg (DE)**
Erfinder: **Zeifang, Günter, Dr., Kurt-Lindemann-Strasse 29, D-6903 Neckargemünd (DE)**

(74) Vertreter: **Ullrich. Thurmod. Dr. et al. Gaisbergstrasse 3, D-6900 Heidelberg (DE)**

## Beschreibung

Die Erfindung betrifft eine Vorrichtung zur optisch-mechanischen in der Zeilenfolge abwechselnden Abtastung zweier Sehfelder und zur Simultandarstellung derselben mit Hilfe optisch-mechanischer Abtaster in zwei im wesentlichen senkrecht zueinander angeordneten Abtastrichtungen, wobei die eine Abtastung in Zeilenrichtung schnell, die andere Abtastung in Höhenrichtung langsam unter Verwendung nur eines Detektors oder einer Detektoranordnung erfolgt.

Bei den bisher bekannten Abtastvorrichtungen für zwei Sehfelder erfolgt die Umschaltung derart, dass jeweils nur ein Sehfeld abgetastet und dargestellt wird.

Aus der DE-A13 211 046 ist eine optische Abtastanordnung zum Abtasten von wenigstens zwei Blickfeldern bekannt.

Bei dieser bekannten Einrichtung erfolgt die Umschaltung zwischen den beiden Sehfeldern jeweils nach einer halben Zeile. Während des Umschaltvorgangs trifft gleichzeitig Strahlung aus beiden Sehfeldern auf den Detektor. Dies ist ein bedeutender Nachteil, weil dadurch der Abtastwirkungsgrad herabgesetzt wird.

Die Aufgabe der Erfindung besteht nun darin eine Vorrichtung zu schaffen, mit der zwei verschiedene Sehfelder in der Zeilenfolge abwechselnd abgetastet und mit Hilfe nur eines Detektors simultan dargestellt werden können, wobei der Zeilen-Abtastwirkungsgrad kleiner oder gleich 50% für beide Sehfelder und die Phasenverschiebung der Zeilenabtastung beider Sehfelder 180 Grad beträgt. Der Vorteil der erfindungsgemässen Vorrichtung liegt darin, dass mögliche Interessenkonflikte zur Auswahl des Bildfeldes bei zwei oder mehreren Beobachtern vermieden werden, da jeder Betrachter jedes gewünschte Sehfeld für sich betrachten kann.

Die erfindungsgemässe Vorrichtung besteht im wesentlichen aus zwei Abtasteinrichtungen für jedes Sehfeld und einem Spiegelrad bzw. einer Scheibe mit am Umfang abwechselnd angeordneten Spiegeln in der Form von Segmenten von zwei Kegelstumpfmänteln, deren gedachte Spitzen voneinander wegweisen, welche Spiegel die Strahlen abwechselnd von den Abtasteinrichtungen der beiden Sehfelder über eine Abbildungsoptik auf den Detektor leiten.

Die Vorrichtung kann auch aus zwei beiden Sehfeldern gemeinsame Abtasteinrichtungen und einer Scheibe mit abwechselnd reflektierenden und transparenten Segmenten bestehen, welche in einem vor der Höhenabtasteinrichtung liegenden Zwischenbild rotiert und abwechselnd die vom ersten Sehfeld über ein erstes Objektiv, einen Umlenkspiegel, ein die Zeilenabtastung bewirkendes refraktives Polygon, einen weiteren Umlenkspiegel und ein weiteres Objektiv bzw. die vom zweiten Sehfeld über ein zweites Objektiv das Polygon und ein Linsensystem mit Umlenkspiegel kommenden Strahlen über die Höhenabtasteinrichtung auf den Detektor durchlässt bzw. reflektiert.

Schliesslich kann die Vorrichtung auch aus zwei beiden Sehfeldern gemeinsame Abtasteinrichtungen und einer Scheibe mit abwechselnd reflektierenden und transparenten Segmenten bestehen, welche zwischen einem Objektiv mit Umlenkspiegel für das erste Sehfeld bzw. zwischen einem Objektiv für das zweite Sehfeld und einem die Zeilenabtastung bewirkenden refraktiven Polygon rotiert und abwechselnd Strahlen aus dem ersten oder zweiten Sehfeld über die Höhenabtasteinrichtung auf den Detektor reflektiert bzw. durchlässt.

Aus den Zeichnungen sind einige Ausführungsformen der erfindungsgemässen Vorrichtung ersichtlich.

Die Fig. 1–3 zeigen in verschiedenen Ansichten eine Vorrichtung mit gemeinsamen Abtastelementen für beide Kanäle,

die Fig. 4 und 5 zeigen ein Ausführungsbeispiel der Vorrichtung, bei dem beide Abtastelemente für beide Kanäle genutzt werden und

die Fig. 6 und 7 stellen ein weiteres Ausführungsbeispiel einer Vorrichtung mit gemeinsam genutzten Abtastelementen dar.

Zur einfacheren Beschreibung wird der Detektor als Sender aufgefasst, d.h. der Strahlengang wird mit vom Detektor ausgehender Strahlung beschrieben. Obwohl in Wirklichkeit Strahlung aus dem Sehfeld auf den Detektor gelangt, ist dies zulässig, da in der Optik Strahlengänge grundsätzlich umkehrbar sind.

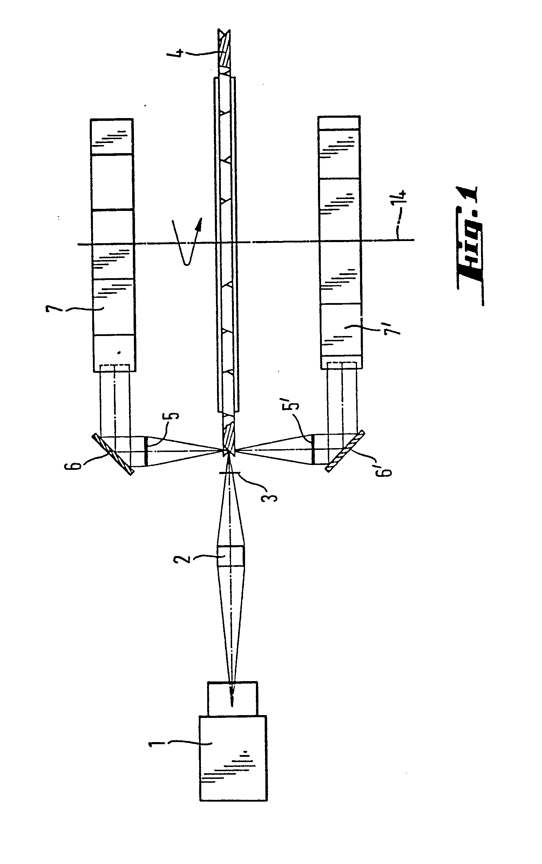

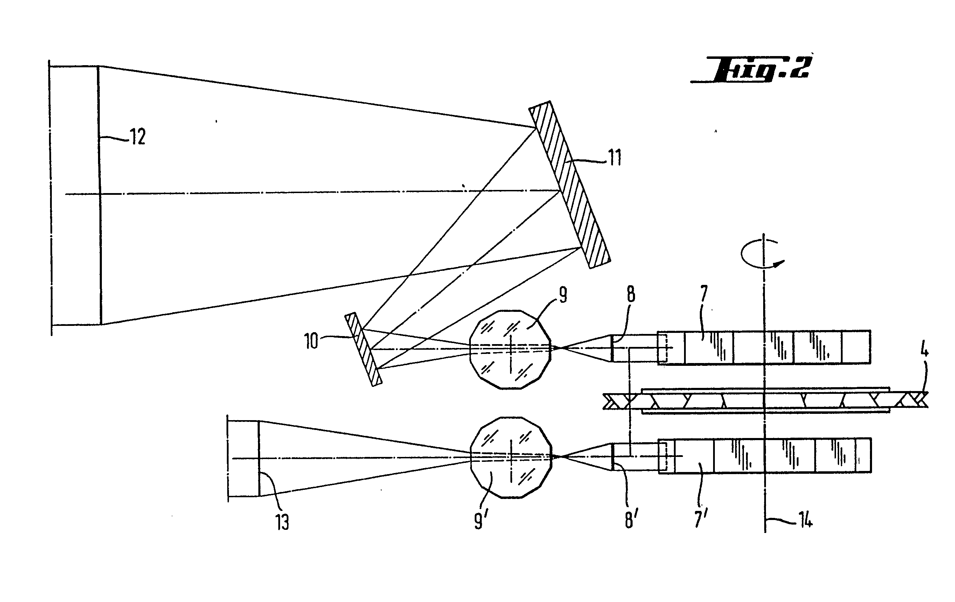

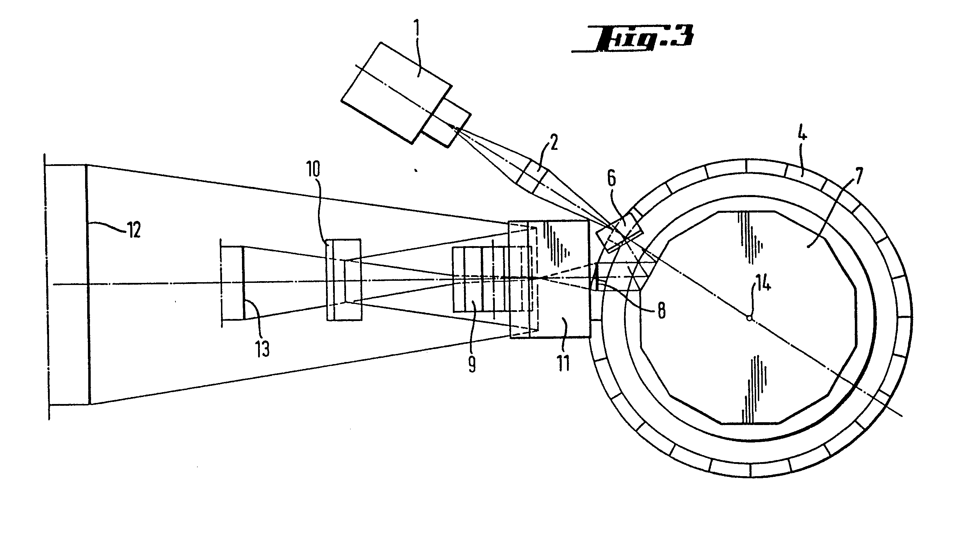

Gemäss den Figuren 1–3 wird vom Detektor 1 durch das Detektorobjektiv 2 ein Zwischenbild auf dem Spiegelrad 4 erzeugt. Mit 3 ist eine Linse bezeichnet. Das Spiegelrad 4 weist auf seinem Umfang – abwechselnd angeordnet – Segmente von zwei Kegelmänteln auf, deren Spitzen einander gegenüberliegen. Die Zahl der Segmente ist gleich der Anzahl der Flächen der Spiegelpolygone 7, 7'. Im Strahlengang zwischen dem Spiegelrad 4 und den Spiegelpolygonen 7, 7' befinden sich die Objektive 5, 5' und die Umlenkspiegel 6, 6'.

Das Spiegelrad 4 und die Polygone 7, 7' rotieren auf einer gemeinsamen Achse 14. Die n-flächigen Spiegelpolygone sind um 180/n Grad gegeneinander gedreht. Die Phasenlage des Spiegelrades ist derart, dass ein vom Detektor 1 ausgehender Zentralstrahl dann auf die Mitte einer Polygonfläche trifft, wenn er auch auf die Mitte des dazugehörigen Kegelmantelsegments trifft.

Während der Rotation von Spiegelrad und Polygonen werden die vom Detektor ausgehenden Strahlen vom Spiegelrad zunächst auf ein Polygon reflektiert und dort in Zeilenrichtung abgelenkt. Läuft dann ein anderes Kegelmantelsegment des Spiegelrades in den Strahlengang, so werden die Strahlen auf das andere Polygon reflektiert. Da auf den Kegelmantelsegmenten ein Bild des Detektors liegt, erfolgt die Umschaltung sehr schnell. Es wird also während der Rotation abwechselnd eine Zeile mit dem einen Polygon und dann eine Zeile mit dem anderen Polygon abgetastet. Der Abtastwirkungsgrad beträgt dabei jeweils fast 50%. Die von den Polygonen abgelenkten Strahlen gelangen auf die Okulare 8, 8'. Die Okulare 8, 8' und die Objektive 12 bzw. 13 stellen Kepler'sche Teleskope dar. In der Nähe der Zwischenbildebene der Teleskope rotieren langsam refraktive Polygone 9, 9', die in bekannter Weise die Bildablenkung bewirken. Durch verschiedene Vergrösserungen der Teleskope werden verschiedene Sehfelder abgetastet. Die Umlenkspiegel 10 und 11 sind ohne Bedeutung für die Funktion.

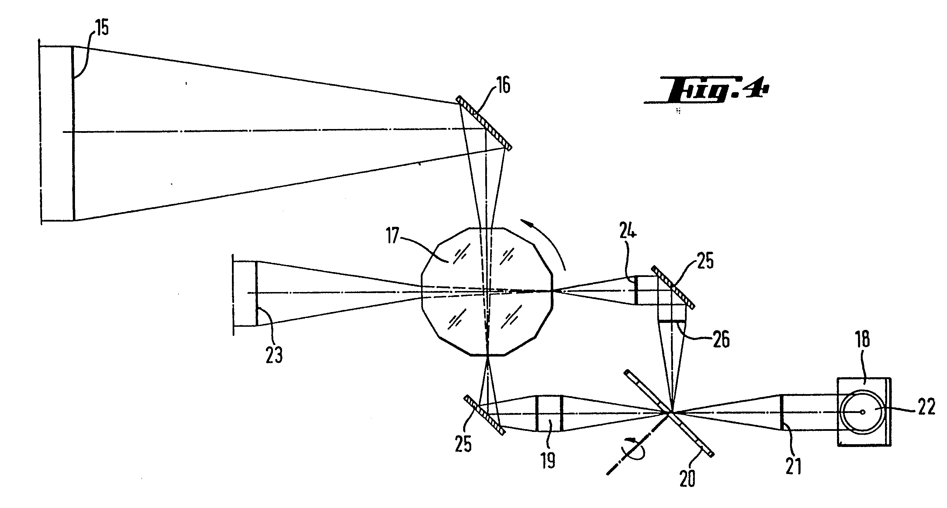

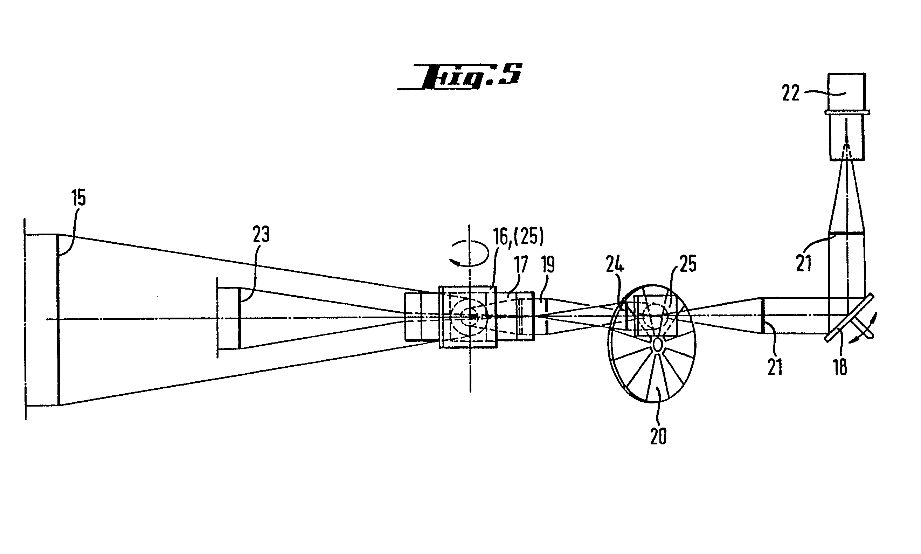

In der in den Figuren 4 und 5 dargestellten Vorrichtung erfolgt die langsamere Bildablenkung mit dem oszillierenden Spiegel 18, der sich im parallelen Strahlengang zwischen den Objektivteilen befindet. Am Ort des Detektorzwischenbildes rotiert eine um ca. 45 Grad geneigte Scheibe 20, deren Achse so angeordnet ist, dass die Bewegung des Detektorzwischenbildes radial erfolgt. Die Scheibe weist abwechselnd reflektierende und transparente Segmente auf. Die durchtretende Strahlung trifft auf ein Objektiv 19 und einen Umlenkspiegel 25. Die reflektierte Strahlung trifft auf das Objektiv 24, 26 und den Umlenkspiegel 25. Diese Objektive erzeugen Bilder des Detektors auf dem Umkreis des refraktiven Polygons 17, welches die Zeilenabtastung bewirkt. Die Zahl der Flächen des Polygons 17 ist zweckmässig gleich der Zahl der Segmente auf der rotierenden Scheibe 20. Beide Elemente müssen dann mit gleicher Drehzahl rotieren, wobei die Phasenlage so gewählt sein muss, dass dann eine Polygonkante auf dem zweiten Detektor-Zwischenbild liegt, wenn gerade ein Segmentübergang auf dem ersten Detektorzwischenbild liegt. Die Objektive 15 und 23, mit verschiedenen Brennweiten für verschieden grosse Sehfelder, bilden den Detektor ins Unendliche ab. Mit 16 ist ein Umlenkspiegel, mit 22 der Detektor bezeichnet.

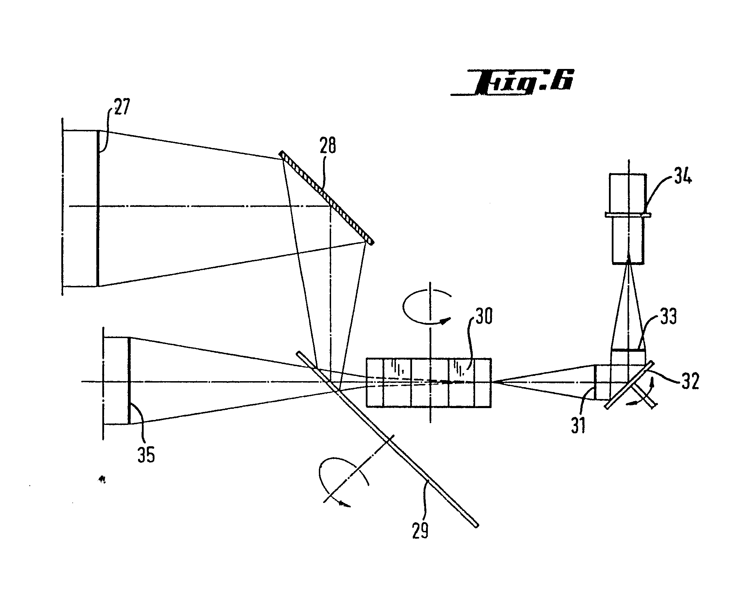

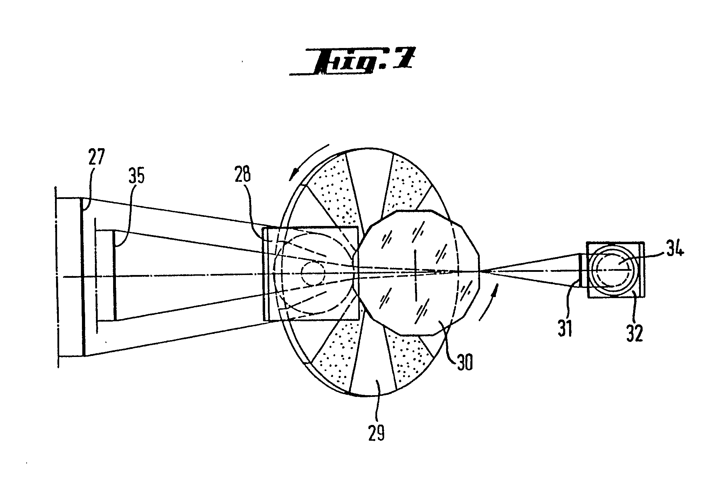

Im dritten Ausführungsbeispiel gemäss Figuren 6 und 7 wird die vom Detektor 34 ausgehende Strahlung vom Objektiv 33 in ein paralleles Bündel umgewandelt. Die Bildablenkung erfolgt durch den oszillierenden Spiegel 32. Das Okular 31 und die Objektive 27 und 35 bilden Kepler'sche Teleskope. Die Zeilenabtastung erfolgt wiederum in bekannter Weise durch ein rotierendes refraktives Polygon 30. Die Umschaltung von einem Sehfeld auf das andere erfolgt durch die rotierende Scheibe 29, die wieder abwechselnd transparente und reflektierende Segmente aufweist. Durch die Rotation des Polygons 30 erfolgt eine Parallelverschiebung des Bündels. Die Scheibe 29 rotiert nun so mit, dass das Bündel während der Ablenkung durch ein Flächenpaar stets auf ein Segment trifft. Nach Durchlauf einer Polygonkante durch das Detektorzwischenbild wird die Abtastung durch das nächste Flächenpaar bewirkt und die Strahlung trifft nun auf das nächste Segment der Scheibe 29. So werden auch hier mit jeweils nahezu 50% Abtastwirkungsgrad abwechselnd die verschiedenen Sehfelder abgetastet. Mit 28 ist ein Umlenkspiegel bezeichnet.

## Patentansprüche

1. Vorrichtung zur optisch-mechanischen, in der Zeilenfolge abwechselnden Abtastung zweier Sehfelder und zur Simultandarstellung derselben mit Hilfe optisch-mechanischer Abtaster in zwei im wesentlichen senkrecht zueinander angeordneten Abtastrichtungen, wobei die eine Abtastung in Zeilenrichtung schnell, die andere Abtastung in Höhenrichtung langsam unter Verwendung nur eines Detektors oder einer Detektoranordnung erfolgt, dadurch gekennzeichnet, dass sie für jedes Sehfeld zwei Abtasteinrichtungen (7, 9; 7', 9') und ein Spiegelrad (4) mit am Umfang abwechselnd angeordneten Spiegeln in der Form von Segmenten von zwei Kegelstumpfmänteln besitzt, deren gedachte Spitzen voneinander weg weisen, welche Spiegel die Strahlen abwechselnd von den Abtasteinrichtungen der beiden Sehfelder über eine Abbildungsoptik (2) auf den Detektor (1) leiten.

2. Vorrichtung zur optisch-mechanischen, in der Zeilenfolge abwechselnden Abtastung zweier Sehfelder und zur Simultandarstellung derselben mit Hilfe optisch-mechanischer Abtaster in zwei im wesentlichen senkrecht zueinander angeordneten Abtasteinrichtungen, wobei die eine Abtastung in Zeilenrichtung schnell, die andere Abtastung in Höhenrichtung langsam unter Verwendung nur eines Detektors oder einer Detektoranordnung erfolgt, dadurch gekennzeichnet, dass sie zwei beiden Sehfeldern gemeinsame Abtasteinrichtungen (17, 18) und eine Scheibe (20) mit abwechselnd reflektierenden und transparenten Segmenten besitzt, welche in einem vor der Höhenabtasteinrichtung (18) liegenden Zwischenbild rotiert und abwechselnd die vom ersten Sehfeld über ein erstes Objektiv (15), einen Umlenkspiegel (16), ein die Zeilenabtastung bewirkendes refraktives Polygon (17), einen weiteren Umlenkspiegel (25) und ein weiteres Objektiv (19) bzw. die vom zweiten Sehfeld über ein zweites Objektiv (23), das Polygon (17) und ein Linsensystem (24, 26) mit Umlenkspiegel (25) kommenden Strahlen über die Höhenabtasteinrichtung (18) auf den Detektor (22) durchlässt bzw. reflektiert.

3. Vorrichtung zur optisch-mechanischen, in der Zeilenfolge abwechselnden Abtastung zweier Sehfelder und zur Simultandarstellung derselben mit Hilfe optisch-mechanischer Abtaster in zwei im wesentlichen senkrecht zueinander angeordneten Abtastrichtungen, wobei die eine Abtastung in Zeilenrichtung schnell, die andere Abtastung in Höhenrichtung langsam unter Verwendung nur eines Detektors oder einer Detektoranordnung erfolgt, dadurch gekennzeichnet, dass sie zwei beiden Sehfeldern gemeinsame Abtasteinrichtungen (30, 32) und eine Scheibe (29) mit abwechselnd reflektierenden und transparenten Segmenten besitzt, welche zwischen einem Objektiv (27) mit Umlenkspiegel (28) für das erste Sehfeld bzw. zwischen einem Objektiv (35) für das zweite Sehfeld und einem die Zeilenabtastung bewirkenden refraktiven Polygon (30) rotiert und abwechselnd Strahlen aus dem ersten oder zweiten Sehfeld über die Höhenabtasteinrichtung (32) auf den Detektor (34) reflektiert bzw. durchlässt.

## Claims

1. Apparatus for the opto-mechanical line sequential scanning of two visual fields and for the simultaneous representation of these using opto-mechanical scanners in two scanning directions substantially perpendicular to each other, one scan being effected rapidly in the direction of the lines, the other being effected slowly vertically using only one detector or a detector arrangement, characterised in that for each visual field it has two scanning devices (7, 9; 7', 9') and a mirror wheel (4) with mirrors arranged alternately on the periphery in the form of segments of two frusto-conical sleeves whose imaginary apexes point away from each other, which mirrors direct the beams alternately from the scanning devices of both visual fields via an imaging lens (2) onto the detector (1).

2. Apparatus for the opto-mechanical line sequential scanning of two visual fields and for the simultaneous representation of these using opto-mechanical scanners in two scanning directions substantially perpendicular to each other, one scan being effected repidly in the direction of the lines, the other being effected slowly vertically using only one detector or a detector arrangement, characterised in that it has two scanning devices (17, 18) common to both visual fields and a disc (20) with alternately reflective and transparent segments, which rotates in an intermediate image lying before the vertical scanning device (18) and transmits or reflects alternately the beams from the first visual field via a first objective (15), a deflecting mirror (16), a refractive polygon (17) effecting the line scanning, a further deflecting mirror (25), and a further objective (19) and the beams from the second visual field via a second objective (23), the polygon (17), and a lens system (24, 26) with a deflecting mirror (25), onto the detector (22).

3. Apparatus for the opto-mechanical line sequential scanning of two visual fields and for the simultaneous representation of these using opto-mechanical scanners in two scanning directions substantially perpendicular to each other, one scan being effected rapidly in the direction of the lines, the other being effected slowly vertically using only one detector or a detector arrangement, characterised in that it has two scanning devices (30, 32) common to both visual fields and a disc (29) with alternately reflective and transparent segments, which rotates between an objective (27) with a deflecting mirror (28) for the first visual field, or between an objective (35) for the second visual field, and a refractive polygon (30) which effects the line scanning, and which disc alternately reflects or transmits beams from the first or second visual field via the vertical scanning device (32) onto the detector (34).

## Revendications

1. Dispositif pour le balayage opto-mécanique, alternant dans la succession des lignes, de deux champs visuels et pour leur représentation simultanée, à l'aide de lecteurs opto-mécaniques dans deux directions de balayage essentiellement perpendiculaires l'une à l'autre, l'un des balayages dans la direction des lignes s'effectuant rapidement et l'autre balayage dans la direction de la hauteur s'effectuant lentement, avec utilisation d'un seul détecteur ou d'un seul système détecteur, caractérisé en ce qu'il comporte deux dispositifs de balayage (7, 9; 7', 9') pour chaque champ visuel et une roue à miroirs (4) munie de miroirs disposés alternativement à sa périphérie, sous la forme de segments de deux surfaces latérales de cône tronqué dont les sommets imaginaires sont mutuellement opposés, miroirs qui dirigent les rayons provenant alternativement des dispositifs de balayage des deux champs visuels vers le détecteur (1), par l'intermédiaire d'une optique de formation d'image (2).

2. Dispositif pour le balayage opto-mécanique, alternant dans la succession des lignes, de deux champs visuels et pour leur représentation simultanée, à l'aide de lecteurs opto-mécaniques dans deux directions de balayage essentiellement perpendiculaires l'une à l'autre, l'un des balayages dans la direction des lignes s'effectuant rapidement et l'autre balayage dans la direction de la hauteur s'effectuant lentement, avec utilisation d'un seul détecteur ou d'un seul système détecteur, caractérisé en ce qu'il comporte deux dispositifs de balayage (17, 18) communs aux deux champs visuels et un disque (20) muni de segments alternativement réfléchissants et transparents, disque qui tourne dans une image intermédiaire située avant le dispositif de balayage en hauteur (18) et qui, alternativement, laisse passer vers le détecteur (22), par l'intermédiaire du dispositif be balayage en hauteur (18), les rayons provenant du premier champ visuel à travers un premier objectif (15), un miroir de déviation (16), un polygone réfracteur (17) produisant le balayage de lignes, un autre miroir de déviation (25) et un objectif supplémentaire (19), et réfléchit vers ledit détecteur (22) les rayons provenant du second visuel à travers un second objectif (23), le polygone (17) et un système de lentilles (24, 26) avec miroir de déviation (25).

3. Dispositif pour le balayage opto-mécanique, alternant dans la succession des lignes, de deux champs visuels et pour leur représentation simultanée, à l'aide de lecteurs opto-mécaniques dans deux directions de balayage essentiellement perpendiculaires l'une à l'autre, l'un des balayages dans la direction des lignes s'effectuant rapidement et l'autre balayage dans la direction de la hauteur s'effectuant lentement, avec utilisation d'un seul détecteur ou d'un seul système détecteur, caractérisé en ce qu'il comporte deux dispositifs de balayage (30, 32) communs aux deux champs visuels et un disque (29) muni de segments alternativement réfléchissants et transparents, disque qui tourne entre un objectif (27) avec miroir de déviation (28) pour le premier champ visuel ou un objectif (35) pour le second champ visuel et un polygone réfracteur (30) produisant le balayage de lignes et qui, alternativement, réfléchit vers le détecteur (34), par l'intermédiaire du dispositif de balayage en hauteur (32), les rayons provenant du premier champ visuel, et laisse passer vers ledit détecteur (34) les rayons provenant du second champ visuel.

**Fig. 1**

Fig.2

0 118 057

**Fig. 3**

0 118 057

**Fig.4**

Fig. 5

Fig.6

0 118 057

# Fig.7